Europäisches Patentamt

European Patent Office

Office européen des brevets

(11) Publication number: **0 149 888**
**B1**

# EUROPEAN PATENT SPECIFICATION

(45) Date of publication of patent specification: **24.05.89**

(51) Int. Cl.⁴: **G 11 B 21/08**

(21) Application number: **84307301.6**

(22) Date of filing: **24.10.84**

(54) **Servo control system for a data recording system and a data recording system provided therewith.**

(30) Priority: **23.12.83 US 564656**

(43) Date of publication of application:
**31.07.85 Bulletin 85/31**

(45) Publication of the grant of the patent:
**24.05.89 Bulletin 89/21**

(84) Designated Contracting States:
**DE FR GB NL**

(56) References cited:
**DE-A-2 909 877**
**GB-A-2 034 080**
**GB-A-2 081 935**
**GB-A-2 082 822**
**US-A-3 854 015**
**US-A-3 924 268**

(73) Proprietor: **MAGNETIC PERIPHERALS INC.**
**8100-34th Avenue South**
**Minneapolis Minnesota 55440 (US)**

(72) Inventor: **Meyer, Russell Allen**
**1115 Valkenburg Drive**
**Colorado Springs Colorado 80907 (US)**

(74) Representative: **Caro, William Egerton et al**
**J. MILLER & CO. Lincoln House 296-302 High**
**Holborn**
**London WC1V 7JH (GB)**

Courier Press, Leamington Spa, England.

## Description

The present invention relates to servo control systems for data recording systems, e.g. optical recording systems. In particular, although not so restricted, the present invention relates to systems for positioning optical apparatus which follows a particular data track on optical recording media in a desired position on a particular track of the optical recording media and for moving that optical apparatus from one track position to another. This invention is not, however, limited in scope to optical recording systems and may also find application in high density magnetic recording and other applications where a large area must be accessed with precision in a short time interval.

Prior art systems for positioning optical apparatus in an optical recording system typically depends upon fine track movements of an optical lens system in dimensions of a comparatively few track spaces with respect to optical recording media by a first system. The first system is in turn mounted and carried by some type of carriage assembly or second system for comparatively large track movements with respect to optical recording media so that the entire recording media is accessed. It is necessary to control both movement of the first system and of the second system. In some prior art systems the first system is used for fine track movements of a particular track on the optical recording media in a track following mode when a track is being accessed. The large track movements of the second system is used for movements from one track to another. The first system for fine track movement is controlled in the prior art by an optically actuated servo loop mechanism which develops servo positioned error signals directly from optical signals received from the media. In such prior art systems, the second system is controlled by track accessing signals developed from a present track address location and a differential signal developed with respect to a desired track location. Such signals are sometimes used in association with a fixed position indicator reticle which provides a position reference indication of the second system with respect to a fixed framework of the optical recording system. Such signals may be comparatively inaccurate compared to the very high track densities achieved in optical recording systems and compared with the speed and accuracy with which it is necessary to move from one track to another track in accessing data in optical recording systems.

Therefore, there is a need for an improved optical recording track following and track seeking control system quickly and reliably to cause a controlled movement of the optical lens system from a first position to a second position.

U.S. Patent Specification No. 3,969,574 shows an optical recording system in which position information for the optical elements is developed from a reference signal between a moving actuator mechanism and a stationary framework or chassis assembly of optical apparatus.

Published British Patent Application No. 2,029,051, shows a first servo loop system for controlling the positioning of optical apparatus in an optical recording system together with a second servo control loop based on a position indicator which senses the radial position of the optical apparatus with respect to optical recording media should the first servo control loop fail. The first servo control loop maintains track position based on a combination of track addressing information and track following information provided optically from the optical recording media.

U.S. Patent Specification No. 4,034,403 shows an optical recording system in which an optical positioning control system develops both a coarse positioning signal and a fine positioning signal using the same optical information derived from optical recording media. Optical gratings are used to develop the information signals.

In one embodiment of a servo control system according to the present invention positioning of a head is controlled by two servo control loops where a first control loop receives track following and track seeking servo control information and where a second servo control loop controls coarse positioning of the head solely by position sensing signals of the relative position of the second system to that of the first system. Such a servo control system is not disclosed in the prior art discussed above.

In the art of magnetic recording control systems, there are known servo control systems for use with high-density track following requirements. Because the art of optical recording systems also relates to high-density track following systems and because other elements of the technology may be considered pertinent, the relevant prior art also includes such control systems. For example, U.S. Patent Specification No. 3,924,268 shows a control system for positioning a magnetic disk transducer head including a primary carriage for coarse positioning and a secondary low-mass carriage riding on the first carriage in order to position a magnetic recording head relative to a magnetic recording medium. By supporting a secondary low-mass carriage on the primary carriage, a highly accurate extremely fast response can be achieved over small distances. However, this known control system works by simultaneously and continuously controlling both carriages in response to a single position error control signal with the secondary low-mass carriage being biased toward a zero displacement position relative to the primary carriage. The control system uses position detection and velocity detection in order to provide servo control signals for primary and secondary actuators. U.S. Patent Specification No. 3,924,268 does not teach the use of a control system for controlling the primary actu-

ator solely by means of the relative position of the secondary actuator with respect to that of the coarse position or primary actuator.

U.S. Patent Specification No. 3,725,764 shows position and velocity detection for controlling a servo motor mechanism in order to follow a servo track on a moving surface of a magnetic disk memory.

U.S. Patent Specification No. 3,854,015 discloses apparatus for reading a record disk in which video and/or audio information is recorded in a spiral track. This information is optically read by means of a beam of light which via a reflecting mirror transmits the information present in the scanned point to a read detector. The radial position of the scanning point is controlled by controlling the angular position of the mirror which for this purpose is included in a control loop. In order to display still pictures or to effect freeze framing, the mirror is subjected to an abrupt change in angular position so that the scanning point undergoes an abrupt radial displacement during the frame flyback period of the video information. The mirror pivotation provides a fine control, whilst a worm gear drive provides a coarse control by shifting the casing containing the source of light and the read detector. The mirror pivotation is limited and a pivoting mirror is inherently incapable of accessing more than a few tracks because the angle of incidence of the light through the objective lens and onto the tracks becomes too great if the light path is moved more than slightly from the perpendicular. For track accessing, a separate control signal unrelated to the mirror position is applied to the coarse control. The apparatus is for a television or video display and the casing movement can be relatively slow to follow a spiral track. It cannot accurately control the extremely rapid acceleration and deceleration characteristics of linear motors to give that rapid response needed for random accessing of data on record disks.

According to the present invention, therefore, there is provided a servo control system for the random accessing by a radially movable system of tracks on a recording media disk in a data recording system, in which the radially movable system is mounted on a fine tracking linear motor which is mounted on a coarse positioning linear motor which is in turn radially movable with respect to the recording media disk, the servo control system being coupled to receive position signals derived from the radially movable system sensing track information on the recording media disk and deriving position information on the recording media disk from data information received from the recording media disk, characterised in that the servo control system, in track accessing operation to position the radially movable system in a desired position, controls the movement of the fine tracking linear motor through a first servo control loop in response to a difference between the actual and desired positions of the radially movable system, and controls the movement of the coarse positioning linear motor through a second servo control loop in response to the output of a relative position sensing system which, in operation, senses the relative position of the fine tracking linear motor with respect to the coarse positioning motor and provides as the output a signal indicating direction and magnitude of the relative displacement of the fine tracking linear motor with respect to the coarse positioning linear motor, the first servo loop being operative during track accessing involving crossing a large number of tracks, to cause movement of the fine tracking linear motor with respect to the coarse positioning linear motor sufficient to induce movement of the coarse position linear motor in a direction to counteract the relative movement.

Preferably, the system is characterised in that the radially movable system has a system data acquisition head adapted to be positioned over the media disk, whereby said media disk is adapted to have each data track individually and uniquely addressable as the result of data address information on the data track and capable of producing track crossing information as the data acquisition head moves radially across data tracks; in that the fine tracking actuator carries the data acquisition head, is of small mass, in tracking mode moves in small movements with respect to the media, and is biased to an arbitrary zero position on the coarse positioning actuator; in that the first servo control loop includes a fine tracking compensation servo loop for receiving data from the data acquisition head concerning track addressing information and data track following information from said data acquisition head and for generating a control signal to drive said fine tracking actuator in small movements with respect to the media disk; in that the second servo control loop is a coarse positioning tracking compensation servo loop for receiving signals from said position sensing means and for generating signals to control the positioning of said coarse positioning actuator; and in that switching means is provided for switching the control of said fine tracking actuator from said fine tracking compensation servo loop to control in a new track seeking drive mode microprocessor means which receives signals from said data acquisition head for producing tracking status and track crossing detection signals and for controlling said fine tracking actuator when operating in said new track seeking drive mode.

In a specific embodiment of the invention two servo control loops are used, one associated with the fine tracking actuator and the other associated with the coarse positioning actuator. The fine tracking actuator is controlled in two modes of operation, the first is a track following mode where a particular data track on the recording media disk is followed and the fine tracking actuator makes small movements to follow the data track allowing for various irregularities in track position and wobble affects in the drive mechanism. The second mode of operation of the servo control system for the fine tracking actuator is a track seeking mode where the servo control system is caused to move from one track location to another. This presupposes a track addressing system where each track of many thousands on a recording media disk has a unique address and this practice has become customary with respect to optical recording as well as magnetic recording arts.

The coarse positioning actuator is controlled by a position sensing system which provides information with respect to the relative position between the fine tracking actuator and the coarse positioning actuator. In a practical embodiment, this position sensing system consists of a moveable flag type element on the fine tracking actuator which interrupts a light beam transmitter and receiver system mounted in a fixed position on the coarse positioning actuator. Depending upon the amount of light interrupted and the direction of movement of the flag interrupting the light beam, the position sensing system provides an indication of the direction and the amount of travel of the fine positioning actuator with respect to the coarse positioning actuator. From this position sensing signal, an appropriate signal is generated to drive the coarse positioning actuator to an appropriate changed location.

The coarse positioning actuator does not need to have additional or different input relating to either its velocity of travel or the relative position of the coarse positioning actuator with respect to a stationary chassis or framework assembly of the servo control system. Sufficient information is obtained from the magnitude and direction of the signal from the position sensing system relating to the relative position difference between the fine tracking actuator and the coarse positioning actuator so that the coarse positioning actuator in effect follows the fine tracking actuator in any necessary travel from one track position to another. The coarse positioning actuator operates at a comparatively lower frequency and longer time constant so that it does not attempt to follow high frequency fast movements of the fine tracking actuator as it makes comparatively small movements in track following.

In order to make large movements from one track to another track address location, the fine tracking actuator moves to its stop limit in the appropriate direction causing the maximum position error signal to be provided to the device of the coarse positioning actuator. The maximum position error signal drives the coarse positioning actuator to its highest rate of travel in the appropriate direction. As the system approaches the desired new track location, the fine tracking actuator moves from its maximum displacement position in effect controlling the coarse positioning actuator to a slower movement and eventually to a stop position.

Because of the mass of the larger coarse positioning actuator, it may take a little extra movement in order to settle down at the desired new track location. However, the fine tracking actuator has sufficient movement capabilities that it may lock onto a new track location and follow the new data track during the time that the coarse positioning actuator settles to its final position which is a position showing no position deviation from a desired zero or centre position on the position sensing system.

Published British Patent Application No. 2132034A shows an appropriate fine positioning linear motor which may be used with a servo control system according to the present application.

The invention is illustrated, merely by way of example, in the accompanying drawings, in which:-

Figure 1 is a block diagram of a servo control system according to the present invention for positioning a reading mechanism over recording media; and

Figure 2 is a function diagram of the servo control system of Figure 1.

Track addressing and track seeking or location is an important and essential function in optical recording systems. At the present time, optical recording technology anticipates a track-to-track spacing or track density of the order of 1.6 μm. This track density as well as other parameters of optical recording requiring tracking accuracy of an optical apparatus with respect to the track of the order of 0.1 μm. This accuracy along with the run-out which exists on optical media, e.g. an optical recording disk, of a reasonably producible quality and which may be replaced in the optical recording system make a simple single linear actuator not feasible. It is required to maintain 0.1 μm accuracy and still be able to access randomly data tracks in a 50 mm range across the optical media. There are tens of thousands of tracks on each optical recording disk.

The very large track densities found in optical recording systems requires that servo information for controlling optical positioning for both tracking and track seek functions must come from the optical media. Thus, each track must have a unique address and track counting is employed in moving from one track location to another. Accordingly, the optical apparatus of such an optical recording system must be able to detect and measure each data track as it is crossed. It has been found that with the optical technology presently envisioned this is possible.

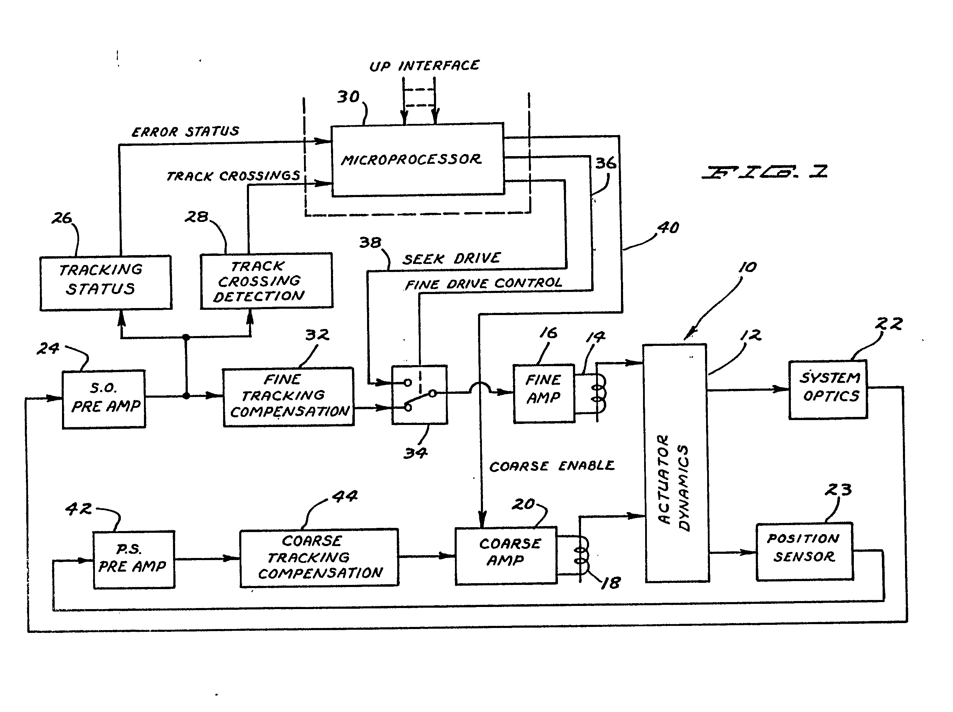

Referring now to Figure 1, a servo control system 10, according to the present invention, is shown for an optical recording system. The optical recording system, including optical elements and electronic components, for reading and writing data on optical media is carried by a fine actuator of comparatively low mass which is mounted on a coarse actuator of comparatively high mass. The physical characteristics of the fine actuator acting against the coarse actuator, which in turn acts with respect to a fixed chassis or framework of the optical recording system, is all represented in Figure 1 by an actuator dynamics block 12.

The fine actuator is controlled by a linear motor 14 which in turn receives the electrical current for its drive from a fine positioning amplifier 16. The coarse actuator is driven by a linear motor 18, which in turn receives the electrical current for its drive from a coarse positioning amplifier 20. System optics 22 reads and writes data from optical media such as an optical recording disk and produces both data from the optical media, such as the particular track address, as well as track counting or track crossing information and track positioning information. A position sensor 23 functions to provide both a direction indication oriented radially with respect to the optical media and in the same linear direction as the travel of the coarse actuator, as well as a magnitude indication indicating the extent to which the fine actuator has moved from an arbitrary zero position with respect to the coarse actuator reference frame. A spring force may be used to centre the fine actuator.

The output of the system optics 22 is provided to a system optics pre-amplifier 24. The pre-amplifier 24 has outputs connected to a tracking status system 26, as well as a track crossing detection system 28. The tracking status system 26 provides indications both as to direction and magnitude of the control necessary to cause the system optics to follow the wobble or other characteristics of a particular data track. The tracking status block 26 provides an error status signal to a microprocessor 30. The track crossing detection system 28 provides a count of the number of tracks crossed in a track seeking function, and this output is also provided to the microprocessor 30.

For example, if the data track presently being accessed is numbered 10,000 and it is desired to access data track 12,000, the system is caused to move and the track crossing detection system 28 counts the 2,000 tracks necessary before the next track is accessed, and the track address read to confirm that it is the desired track. The microprocessor 30 provides track counting and track accessing functions so that the system is able to move under control signals that correlate to the necessary movement from a first position to another position.

Tbe pre-amplifier 24 is also connected to a fine tracking compensation system 32, which is an analog servo control loop which provides output signals to control the fine positioning amplifier 16. A switch 34, which is electrically operated by the microprocessor 30, through a control channel 36 connects the fine tracking compensation system 32 to the fine positioning amplifier 16 during an access mode when a single data track is being accessed. At times when a new data track is being accessed from a presently accessed data track, the oontrol channel 36 causes the switch 34 to be connected to a seek drive control channel 38. The seek drive control channel 38 drives the fine positioning amplifier 16 in the required direction and magnitude to cause the linear motor 14 to displace the fine actuator so as to cause the system optics to move towards the desired new data track.

The microprocessor 30 also has a control channel 40 to the coarse positioning amplifier 20 for controlling track seeking functions of comparatively large address locations of many hundreds of thousands of tracks. Normally, the position sensor 23 provides an output magnitude and direction signal to a position sensor preamplifier 42, which provides an error signal to control a coarse tracking compensation servo system 44. The coarse tracking compensation servo system 44 produces an output signal which is used to control the coarse positioning amplifier 20 so that the coarse actuator follows the system optics to the appropriate new location.

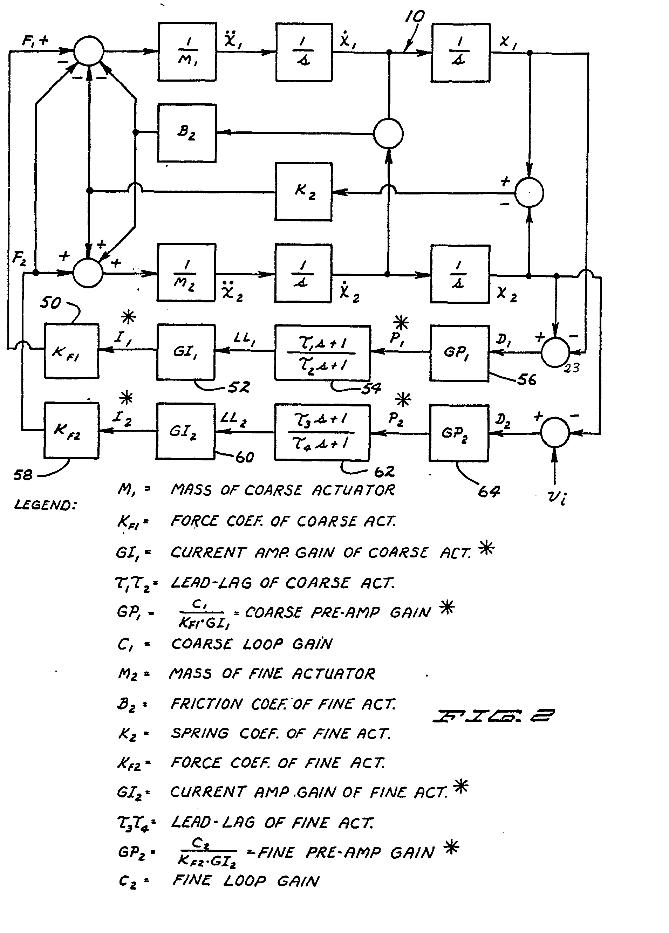

Referring now to Figure 2, the servo control system 10 is shown in system function diagram form. The boxes are labeled with the system functions represented and the legend shows how the system works. The system function diagram is comparatively self-explanatory. Standard terminology for servo loop analysis is used. A coarse actuator 50 is shown connected to a coarse positioning amplifier 52. The system function in box 54 represents system characteristics, while a pre-amplifier is represented by a box 56. Similarly, a fine actuator is represented at 58, while a fine positioning amplifier is represented at 60, a system characteristic at 62, and a fine drive pre-amplifier at 64. The other characteristics of the system are shown as labeled with the subscript 1 referring to the coarse actuator and the subscript 2 referring to the fine actuator. The system is modelled as a small mass fine actuator relating to a larger mass coarse actuator having a spring coefficient K and a friction coefficient B. The fine actuator produces a force $F_2$. Similarly, the coarse actuator is modelled as a larger mass, having an actuator which produces a force on it with respect to the framework of the optical recording system. The microprocessor 30 shown in Figure 1 relates all distances in the system to distance between a desired track location and the actual track location. Thus, although the position sensor senses the relative position between the coarse actuator and the fine actuator, the microprocessor computes a distance between actual location and desired location.

The fine actuator is a small spring mass actuator which is biased to a zero position in the radial direction with respect to the rotating optical media by springs. The fine actuator driving force and the coarse actuator driving force are controlled independently. All of the mechanical configuration is embodied in the actuator dynamics block 12 of Figure 1.

Two sets of error signals are generated, a system optics error signal and a position sensor error signal. The system optics block uses embedded servo information in the optical media, including track addressing and track crossing characteristics based on the modulation method involved. The error signal generated by the system optics represents the spacing differences between the fine actuator and the track to be followed. The second error signal is generated by the position sensor relating the fine actuator to the coarse actuator. The position sensor 23 measures the relative spacing of the two actuators.

During the tracking mode, the position sensor is used to control the coarse actuator. The servo loop for the coarse actuator is stabilised by a lead-lag network in the coarse tracking compensation servo system 44. As a result, the coarse actuator follows the movements of the fine actuator. The error signal from the system optics 22 is used to control the fine actuator 14 and the fine tracking compensation system 32 is stabilised with the lead-lag network. The overall tracking loop configuration is diagrammed in Figure 2. Although the mechanical systems are coupled, the effective loop characteristic for the fine actuator is significantly different than that of the coarse actuator. The different servo loop characteristics inhibit undesired loop interactions so that the system is stable. The resultant tracking system allows the fine actuator to follow large run-outs of data tracks on the optical media at comparatively high frequencies. The coarse actuator only reacts to comparatively low frequency variations, essentially only those required by moving from one track to another.

During track seek operations, the coarse actuator continues to follow the motions of the fine actuator. The fine actuator is driven by the microprocessor 30 to the desired track. Referring again to Figure 1, the tracking error signal from the system optics 22 is used to detect track crossings. The track crossings count is fed into the microprocessor 30. The microprocessor measures the time between track crossings in order to determine the velocity of the system optics. These calculations are standard calculations and are made in the microprocessor. The microprocessor determines the distance between the track to be accessed and the present track location. Calculating the change in distance divided by the change in time, the microprocessor generates the average velocity of the fine actuator. The microprocessor 30 also determines the number of tracks to go before the desired new track location. The number of tracks remaining is used to generate the desired velocity control signal from a velocity trajectory or profile stored in memory. The difference between the average velocity and the desired velocity generates a velocity error signal. The microprocessor 30 outputs the velocity error signal to a digital to an analog converter that drives the fine positioning amplifier 16 using the seek device control channel 38 with the switch 34 in the appropriate position. Large track seek operations result in high velocities over large distances from the desired track and require a continual reduction in velocity until the desired track is actually reached. When the desired track is reached, the fine actuator is returned to the fine tracking mode by operation of the switch 34 to use the output of the fine tracking compensation system 32 to control the fine positioning amplifier 16. The microprocessor 30 always monitors the error signal derived from the system to determine that a stable tracking state exists.

Maintaining the tracking accuracy with a high band width fine actuator servo control loop allows the coarse actuator servo control loop to be of a comparatively low band width. An order of magnitude of servo control loop band width separation allows the two servo control loops to be stabilised independently using standard servo control loop analysis. Although both servo control loops could be stabilised with the tracking error signal from the system optics 22, the additional position sensor 23 is useful for track seeking reasons. The position sensor 23 measures the relative positions of the coarse and fine actuators and is used to stabilise the coarse positioning servo control loop during track seeking functions. The fine position servo control loop is stabilised with the tracking error signal derived from the system optics.

Selection of system function values for the two servo loops can for the most part be performed using conventional servo loop techniques. The fine actuator as a spring mass system and the coarse actuator should both have lead-lag compensation as well as high frequency roll-off characteristics. To minimise unnecessary system interactions, both servo loops should have comparatively large phase margins to reduce oscillation tendencies. The gain of the servo loop of the fine actuator is dictated by the tracking accuracy desired and the track run-out or wobble which is allowed in the optical media. The gain of the servo loop of the coarse actuator is set at the required value in order to provide desired response times for the system seek time criteria when accessing tracks.

The ability of the servo control system to capture or access a new track location when moving from a former track location is important. Thus, the characteristics of the fine actuator and the coarse actuator are important to this result. The comparatively low loop band width of the coarse actuator results in a much slower response time than that of the fine actuator. Thus, track acquisition, where data is read on the new track, is accomplished when the fine actuator has arrived at the new track location. Therefore, the servo control system does not have to wait for the coarse actuator to stabilise in a final position before track accessing occurs. It may be necessary to stabilise the coarse actuator before another track seek, but this is of no concern because the settling time of the coarse actuator will occur during the data access time required for any useful track following.

**Claims**

1. A servo control system for the random accessing by a radially movable system (22) of tracks on a recording media disk in a data recording system, in which the radially movable system (22) is mounted on a fine tracking linear motor (14) which is mounted on a coarse positioning linear motor (18) which is in turn radially movable with respect to the recording media disk, the servo control system being coupled to receive position signals derived from the radially movable system (22) sensing track information on the recording media disk and deriving position information on the recording media disk from data information received from the recording media disk, characterised in that the servo control system, in track accessing operation to position the radially movable system (22) in a desired position, controls the movement of the fine tracking linear motor (14) through a first servo control loop in response to a difference between the actual and desired positions of the radially movable system (22), and controls the movement of the coarse positioning linear motor (18) through a second servo control loop in response to the output of a relative position sensing system (23) which, in operation, senses the relative position of the fine tracking linear motor (14) with respect to the coarse positioning motor (18) and provides as the output a signal indicating direction and magnitude of the relative displacement of the fine tracking linear motor (14) with respect to the coarse positioning linear motor (18), the first servo loop being operative during track accessing involving crossing a large number of tracks, to cause movement of the fine tracking linear motor (14) with respect to the coarse positioning linear motor (18) sufficient to induce movement of the coarse positioning linear motor (18) in a direction to counteract the relative movement.

2. A system as claimed in claim 1 for a data recording system, characterised in that the radially movable system (22) has a system data acquisition head adapted to be positioned over the media disk, whereby said media disk is adapted to have each data track individually and uniquely addressable as the result of data address information on the data track and capable of producing track crossing information as the data acquisition ahead moves radially across data tracks, in that the fine tracking actuator (14) carries the data acquisition head, is of small mass, in tracking mode moves in small movements with respect to the media, and is biased to an arbitrary zero position on the coarse positioning actuator (18); in that the first servo control loop includes a fine tracking compensation servo loop for receiving data from the data acquisition head concerning track addressing information and data track following information from said data acquisition head and for generating a control signal to drive said fine tracking actuator (14) in small movements with respect to the media disk; in that the second servo control loop is a coarse positioning tracking compensation servo loop for receiving signals from said position sensing means (23) and for generating signals to control the positioning of said coarse positioning actuator (18); and in that switching means (34) is provided for switching the control of said fine tracking actuator (14) from said fine tracking compensation servo loop to control in a new track seeking drive mode microprocessor means (30) which receives signals from said data acquisition head for producing tracking status and track crossing detection signals and for controlling said fine tracking actuator when operating in said new track seeking drive mode.

3. A system as claimed in claim 1 or 2, in which the radially movable system (22) is an optical system and the disk is an optical recording media disk.

4. A system as claimed in any preceding claim, characterised in that the fine tracking linear motor (14) is arranged to be controlled by said first servo control loop having a bandwidth at least an order of magnitude greater than that of the second servo control loop controlling the coarse positioning linear motor (18).

5. A system as claimed in any preceding claim, characterised in that the bandwidth of the first servo control loop is such that it responds primarily to high frequency track following requirements.

6. A system as claimed in any preceding claim characterised in that the bandwidth of the second servo control loop is such that it does not respond to high frequency track following requirements.

7. Data recording system characterised by having a servo control system as claimed in any preceding claim.

**Patentansprüche**

1. Servo-Steuersystem für den wahlfreien Zugriff eines in Radialrichtung beweglichen Systems (22) auf Spuren einer Aufzeichnungsmedium-Platte in einem Datenaufzeichnungssystem, bei dem das in Radialrichtung bewegliche System (22) auf einem Fein-Spurnachführ-Linearmotor (14) befestigt ist, der auf einem Grob-Einstell-Linearmotor (18) befestigt ist, der seinerseits in Radialrichtung bezüglich der Aufzeichnungsmedium-Platte beweglich ist, wobei das Servo-Steuersystem zum Empfang von Positionssignalen angeschaltet ist, die von dem in Radialrichtung beweglichen System (22) abgeleitet sind, das Spurinformationen auf der Aufzeichnungsmedium-Platte abtastet und Positionsinformationen auf der Aufzeichnungsmedium-Platte von Dateninformationen ableitet, die von der Aufzeichnungsmedium-Platte empfangen werden, dadurch gekennzeichnet, daß das Servo-Steuersystem bei der Spurzugriffbetriebsweise zur Einstellung des in Radialrichtung beweglichen Systems (22) auf eine gewünschte Position die Bewegung des Fein-Spurnachführ-Linearmotors (14) über eine erste Servosteuerschleife in Abhängigkeit von einer Differenz zwischen den Ist- und Soll-Positionen des in Radialrichtung beweglichen Systems (22) steuert und die Bewegung des Grob-Einstell-Linearmotors (18) über eine zweite Servosteuerschleife in Abhängigkeit von dem Ausgang eines Relativpositions-Meßsystems (23) steuert, das im Betrieb die Relativposition des Fein-Spurnachführ-Linearmotors (14) bezüglich des Grob-Einstellmotors (18) feststellt und als Ausgang ein Signal liefert, das die Richtung und Größe der Relativbewegung des Fein-Spurnachführ-Linearmotors (14) bezüglich des Grob-Einstell-Linearmotors (18) anzeigt, wobei die erste Servoschleife während des Spurzugriffs, der das Überqueren einer großen Anzahl von Spuren einschließt, derart betrieben wird, daß eine Bewegung des Fein-Spurnachführ-Linearmotors (14) bezüglich des Grob-Einstell-Linearmotors (18) hervorgerufen wird, die ausreicht, um eine Bewegung des Grob-Einstell-Linearmotors (18) in einer Richtung hervorzurufen, die der Relativbewegung entgegenwirkt.

2. System nach nach Anspruch 1 für ein Datenaufzeichnungssystem, dadurch gekennzeichnet, daß das in Radialrichtung bewegliche System (22) einen Systemdaten-Erfassungskopf aufweist, der so ausgebildet ist, daß er über der Aufzeichnungsmedium-Platte positionierbar ist, wodurch jede Datenspur der Aufzeichnungsmedium-Platte getrennt und in eindeutiger Weise als Ergebnis von Datenadresseninformationen auf der Datenspur adressierbar ist und die Aufzeichnungsmedium-Platte Spurüberquerungsinformationen kann, während sich der Datenerfassungskopf in Radialrichtung über die Datenspuren bewegt, daß das Fein-Spurnachführstellglied (14) den Datenerfassungskopf trägt, eine geringe Masse aufweist, sich in der Spurnachführbetriebsweise in kleinen Bewegungen bezüglich des Mediums bewegt und auf eine willkürliche Null-Position auf dem Grob-Einstell-Stellglied (18) vorgespannt ist, daß die erste Servosteuerschleife eine Fein-Spurnachführ-Kompensationsservoschleife zum Empfang von Daten von dem Datenerfassungskopf bezüglich der Spuradressierinformation und von Datenspur-Folge-Informationen von dem Datenerfassungskopf und zur Erzeugung eines Steuersignals zum Antrieb des Fein-Spurnachführ-Stellgliedes (14) in kleinen Bewegungen bezüglich der Aufzeichnungs-Medium-Platte einschließt, daß die zweite Servosteuerschleife eine Grobeinstell-Spurnachführ-Kompensationsservoschleife zum Empfang von den Positionsmeßeinrichtungen (23) und zur Erzeugung von Signalen ist, die die Einstellung des Grob-Einstell-Stellgliedes (18) steuern, und daß Schalteinrichtungen (34) zum Umschalten der Steuerung des Fein-Spurnachführ-Stellgliedes (19) von der Fein-Spurnachführ-Kompensationsservoschleife auf eine Steuerung durch eine eine neue Spur suchende Antriebsbetriebsart-Mikroprozessoreinrichtung (30) vorgesehen sind, die Signale von dem Datenerfassungskopf empfängt, um Spurnachführ-Status-und Spurüberquerungs-Detektorsignale zu erzeugen und um das Fein-Spurnachführ-Stellglied zu steuern, wenn dieses in der genannten, eine neue Spur suchenden Antriebsbetriebsart betrieben wird.

3. System nach Anspruch 1 oder 2, dadurch gekennzeichnet, daß das in Radialrichtung bewegliche System (22) ein optisches System ist, und daß die Platte eine optische Auszeichnungsmedium-Platte ist.

4. System nach einem der vorhergehenden Ansprüche, dadurch gekennzeichnet, daß der Fein-Spurnachführ-Linearmotor (14) so ausgebildet ist, daß er durch die erste Servosteuerschleife gesteuert wird, die eine Bandbreite aufweist, die zumindestens um eine Größenordnung größer als die der zweiten Servosteuerschleife ist, die den Grob-Einstell-Linearmotor (18) steuert.

5. System nach einem der vorhergehenden Ansprüche, dadurch gekennzeichnet, daß die Bandbreite der ersten Servosteuerschleife derart ist, daß sie in der Hauptsache auf Hochfrequenz-Spurnachführanforderungen anspricht.

6. System nach einem der vorhergehenden Ansprüche, dadurch gekennzeichnet, daß die Bandbreite der zweiten Servosteuerschleife derart ist, daß sie nicht auf Hochfrequenz-Spurnachführanforderungen anspricht.

7. Datenaufzeichnungssystem, dadurch gekennzeichnet, daß es ein Servosteuersystem nach einem der vorhergehenden Ansprüche aufweist.

**Revendications**

1. Un système d'asservissement pour permettre à un système mobile en direction radiale (22) d'accéder de façon directe à des pistes sur un disque de support d'enregistrement dans un système d'enregistrement de données, dans lequel le système mobile en direction radiale (22) est monté sur un moteur linéaire de suivi de piste fin (14) qui est monté sur un moteur linéaire de positionnement grossier (18), qui est lui-même mobile en direction radiale par rapport au disque de support d'enregistrement, le système d'asservissement étant connecté de façon à recevoir des signaux de position qui sont obtenus à partir du système mobile en direction radiale (22), détectant une information de piste sur le disque de support d'enregistrement, et élaborant une information de position sur le disque de support d'enregistrement, à partir d'une information de données reçue à partir du disque de support d'enregistrement, caractérisé en ce que, dans une opération d'accès à une piste pour positionner le système mobile en direction radiale (22) dans une position désirée, le système d'asservissement commande le mouvement du moteur linéaire de suivi de piste fin (14), par l'intermédiaire d'une première boucle d'asservissement, sous la dépendance d'une différence entre la position réelle et la position désirée du système mobile en direction radiale (22), et il commande le mouvement du moteur linéaire de positionnement grossier (18) par l'intermédiaire d'une seconde boucle d'asservissement, sous la dépendance du signal de sortie d'un système de détection de position relative (23), qui pendant le fonctionnement, détecte la position relative du moteur linéaire de suivi de piste fin (14) par rapport au moteur de positionnement grossier (18), et qui fournit en tant que signal de sortie un signal indiquant la direction et l'amplitude du déplacement relatif du moteur linéaire de suivi de piste fin (14) par rapport au moteur linéaire de positionnement grossier (18), la première boucle d'asservissement fonctionnant pendant une opération d'accès à une piste qui fait intervenir la traversée d'un grand nombre de pistes, pour produire un mouvement du moteur linéaire de suivi de piste fin (14) par rapport au moteur linéaire de positionnement grossier (18), suffisant pour induire un mouvement du moteur linéaire de position grossier (18) dans une direction qui s'oppose au mouvement relatif.

2. Un système selon la revendication 1, pour un système d'enregistrement de données, caractérisé en ce que le système mobile en direction radiale (22) comporte une tête de saisie de données du système, qui est conçue pour être positionnée sur le disque de support d'enregistrement, grâce à quoi chaque piste de données de ce disque de support d'enregistrement peut être adressée individuellement et sans ambiguïté au moyen d'une information d'adresse de données qui se trouve sur la piste de données, et est capable de produire une information de traversée de piste lorsque la tête de saisie de données se déplace radialement en traversant des pistes de données, en ce que l'actionneur de suivi de piste fin (14) porte la tête de saisie de données, il a une masse faible, il se déplace avec de petits mouvements par rapport au support d'enregistrement dans le mode de suivi de piste, et il est sollicité vers une position zéro arbitraire sur l'actionneur de positionnement grossier (18); en ce que la première boucle d'asservissement comprend une boucle d'asservissement de compensation de suivi de piste fin qui est destinée à recevoir des données provenant de la tête de saisie de données et concernant une information d'adressage de piste, ainsi qu'une information de suivi de piste de données provenant de la tête de saisie de données, et à produire un signal de commande pour entraîner l'actionneur de suivi de piste fin (14) avec de petits mouvements par rapport au disque de support d'enregistrement; en ce que la seconde boucle d'asservissement est une boucle d'asservissement de compensation de suivi de piste à positionnement grossier, destinée à recevoir des signaux provenant des moyens de détection de position (23), et à produire des signaux pour commander le positionnement de l'actionneur de positionnement grossier (18); et en ce que des moyens de commutation (34) sont prévus pour commuter la commande de l'actionneur de suivi de piste fin (14) de la boucle d'asservissement de compensation de suivi de piste à la commande dans un nouveau mode d'entraînement de recherche de piste, mis en oeuvre par des moyens à microprocesseur (30) qui reçoivent des signaux provenant de la tête de saisie de données pour produire des signaux d'état de suivi de piste et des signaux de détection de traversée de piste, et pour commander l'actionneur de suivi de piste fin pendant le fonctionnement dans le nouveau mode d'entraînement de recherche de piste.

3. Un système selon la revendication 1 ou 2, dans lequel le système mobile en direction radiale (22) est un système optique, et le disque est un disque de support d'enregistrement optique.

4. Un système selon l'une quelconque des revendications précédentes, caractérisé en ce que le moteur linéaire de suivi de piste fin (14) est conçu pour être commandé par la première boucle d'asservissement, ayant une largeur de bande supérieure d'au moins un ordre de grandeur à celle de la seconde boucle d'asservissement qui commande le moteur linéaire de positionnement grossier (18).

5. Un système selon l'une quelconque des revendications précédentes, caractérisé en ce que la largeur de bande de la première boucle d'asservissement est telle que cette boucle répond essentiellement aux exigences de haute fréquence concernant la fonction de suivi de piste.

6. Un système selon l'une quelconque des revendications précédentes, caractérisé en ce que la largeur de bande de la seconde boucle d'asservissement est telle que cette boucle ne répond pas aux exigences de haute fréquence concernant la fonction de suivi de piste.

7. Système d'enregistrement de données caractérisé en ce qu'il comprend un système d'asservissement selon l'une quelconque des revendications précédentes.

FIG. 1

UP INTERFACE

30

MICROPROCESSOR

ERROR STATUS

TRACK CROSSINGS

36

40

26

28

38

SEEK DRIVE

FINE DRIVE CONTROL

10

TRACKING STATUS

TRACK CROSSING DETECTION

32

16

14

12

22

24

S.O. PRE AMP

FINE TRACKING COMPENSATION

FINE AMP

SYSTEM OPTICS

34

COARSE ENABLE

ACTUATOR DYNAMICS

23

42

44

20

P.S. PRE AMP

COARSE TRACKING COMPENSATION

COARSE AMP

18

POSITION SENSOR

EP 0 149 888 B1

LEGEND:

$M_1$ = MASS OF COARSE ACTUATOR

$K_{F1}$ = FORCE COEF. OF COARSE ACT.

$GI_1$ = CURRENT AMP. GAIN OF COARSE ACT. *

$\tau_1, \tau_2$ = LEAD-LAG OF COARSE ACT.

$GP_1$ = $\dfrac{C_1}{K_{F1} \cdot GI_1}$ = COARSE PRE-AMP GAIN *

$C_1$ = COARSE LOOP GAIN

$M_2$ = MASS OF FINE ACTUATOR

$B_2$ = FRICTION COEF. OF FINE ACT.

$K_2$ = SPRING COEF. OF FINE ACT.

$K_{F2}$ = FORCE COEF. OF FINE ACT.

$GI_2$ = CURRENT AMP. GAIN OF FINE ACT. *

$\tau_3, \tau_4$ = LEAD-LAG OF FINE ACT.

$GP_2$ = $\dfrac{C_2}{K_{F2} \cdot GI_2}$ = FINE PRE-AMP GAIN *

$C_2$ = FINE LOOP GAIN

FIG. 2

2